# EUROPEAN PATENT SPECIFICATION

(11) **EP 2 224 698 B1**
(45) Date of publication and mention of the grant of the patent: **05.06.2013**
(21) Application number: 09154043.5
(22) Date of filing: 27.02.2009
(51) Int. Cl.: H04M 1/2745, H04M 1/725

(54) **System and method for providing dialing access links**
System und Verfahren zur Bereitstellung von Wahlzugangsverknüpfungen
Système et procédé pour la fourniture de liens d'accès de numérotation

(43) Date of publication of application: 01.09.2010
(73) Proprietor: Research In Motion Limited, Waterloo, ON N2L 3W8 (CA)
(72) Inventor: Scott, Sherryl Lee Lorraine, Waterloo Ontario N2L 3L3 (CA)
(74) Representative: MERH-IP Matias Erny Reichl Hoffmann

(56) References cited:
- US-A1- 2008 259 045
- US-B1- 7 231 229

## Description

The present disclosure relates generally to telecommunications devices, and more particularly to dialing and access link functions provided on such devices.

### BACKGROUND

The number of digits required to dial a telephone number varies from country to country, and region to region. On some handheld mobile communication devices, a dialing feature may be provided to allow a user to "dial" frequently called telephone numbers more quickly and accurately by assigning frequently used telephone numbers to individual "speed dial" keys. Another dialing feature that may be provided is voice activated dialing which allows a user to dial a telephone number "hands free", simply by speaking a particular name into a microphone. Still another dialing feature that may be used to assist with dialing telephone numbers is the use of mnemonic dialing, such as using mnemonic phone numbers or mnemonic short codes, which tend to be easier to memorize and faster to use.

US 7,231,229 B1 discloses a communication device, wherein user activation of a speed-dial button causes a context-sensitive menu to be displayed. The menu lists available communication modes for contacting the party associated with the speed-dial button.

EP 1 780 997 discloses a method of controlling a mobile device involving the steps of composing e-mail and activating key to send message to address entered in reaprent address field.

### BRIEF DESCRIPTION OF THE DRAWINGS

In the figures which illustrate exemplary embodiments:
FIG. 1 is a schematic block diagram of various components of a handheld communication device;
FIG. 2 is an illustrative front view of a handheld communication device including the various components as shown in FIG. 1;
FIG. 3 is a schematic block diagram of a network environment in which the device of FIG. 1 and FIG. 2 may operate;
FIG. 4 is a schematic block diagram of certain modules of a system in accordance with an embodiment;
FIG. 5A shows an illustrative example of a user interface for dialing a short code;
FIG. 5B shows the user interface of FIG. 5A in which one of the available access links is selected for access;
FIG. 5C shows an alternative embodiment in which an access link is displayed adjacent a dialing short code input field;
FIG. 6A shows another illustrative example of a user interface for dialing a short code in accordance with another embodiment;
FIG. 6B shows the user interface of FIG. 6A in which one of the available access links is selected for access; and
FIG. 7 is a schematic flow chart of a method in accordance with an embodiment.

### DESCRIPTION OF PREFERRED EMBODIMENT

As noted above, the present disclosure relates to a system and method for providing dialing access links.

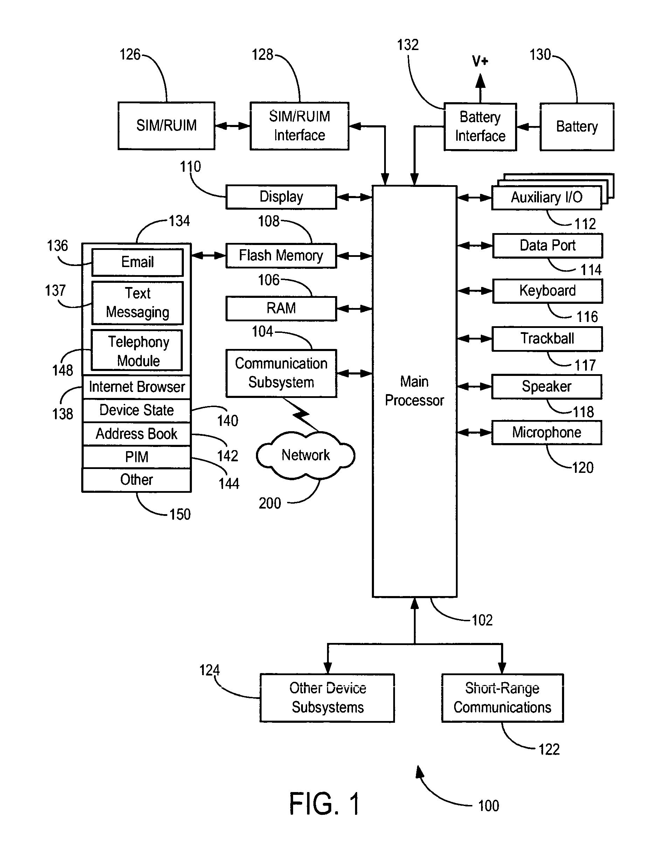

In an illustrative embodiment, the principles of the present disclosure may be practiced with a mobile communication device in a wireless operating environment. Shown in FIG. 1 is a schematic block diagram of an illustrative mobile communication device 100. The communication device 100 may comprise a number of components, including a main processor 102 which controls the overall operation of communication device 100. Communication functions, including data and voice communications, may be performed through a communication subsystem 104. The communication subsystem 104 may receive messages from and sends messages to a wireless network 200.

The main processor 102 may also interact with additional subsystems such as a random access memory (RAM) 106, a flash memory 108, a display 110, an auxiliary input/output (I/O) subsystem 112, a data port 114, a keyboard 116, a trackball 117, a speaker 118, a microphone 120, short-range communications 122 and other device subsystems 124. In some embodiments, the keyboard 116 may comprise a virtual keyboard or a physical keyboard or both. In some embodiments, the display 110 may comprise a touchscreen display.

Some of the subsystems of the communication device 100 may perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list. The trackball 117 may be used for various navigation functions, such as navigating through a graphical user interface (GUI) menu displayed on display 110. The trackball 117 may also be configured with a secondary actuation feature, such as allowing a user to depress the trackball, to allow selection of a highlighted item.

Operating system software used by the main processor 102 is typically stored in a persistent store such as flash memory 108. Those skilled in the art will appreciate that the operating system, specific device applications, or parts thereof, may be temporarily loaded into a volatile store such as the RAM 106.

The communication device 100 may send and receive communication signals over the wireless network 200 after required network registration or activation procedures have been completed. Network access may be associated with a subscriber or user of the communication device 100.

The communication device 100 may be a battery-powered device and may include a battery interface 132 for receiving one or more rechargeable batteries 130. In some embodiments, the battery 130 may be a smart battery with an embedded microprocessor. The battery interface 132 is coupled to a regulator (not shown), which assists the battery 130 in providing power V+ to the communication device 100. In some embodiments, the communication device 100 may be solar powered or otherwise powered with or without use of a battery.

The main processor 102, in addition to its operating system functions, enables execution of various software applications 134 on the communication device 100. A subset of software applications 134 that control basic device operations, including data and voice communication applications, will normally be installed on the communication device 100 during its manufacture.

Software applications 134 may include an email module 136. Email module 136 can be any suitable email software program that allows a subscriber or user of the communication device 100 to send and receive email communications. Various alternatives exist for the messaging application 136 as is well known to those skilled in the art. Messages that have been sent or received by the user are typically stored in local storage such as flash memory 108 of the communication device 100, or in some other suitable storage element in the communication device 100. In an alternative embodiment, some of the sent and received messages may be stored remotely from the device 100 such as in a data store of an associated host system that the communication device 100 communicates with.

Software applications 134 may also include a text messaging module 137 for sending and receiving Short Message Service (SMS) text messages on device 100. Furthermore, software applications 134 may include a telephony module 148 for supporting various telephony functions on device 100, including various speed dialing functions such as speed dial keys, voice activated dialing, and/or short code dialing.

Still referring to FIG. 1, telephony module 148 may be operatively integrated with communication subsystem 104, keyboard 116, trackball 117, speaker 118, and microphone 120. Telephony module 148 may also be integrated with address book 142, e-mail module 136, text messaging module 137, Internet browser 138, RAM 106, flash memory 108 and display 110 to perform various other telephony functions on device 100.

The device 100 may further include a device state module 140, a Personal Information Manager (PIM) 144, and various other modules 150. Additional software applications may also be loaded onto the communication device 100 through at least one of the wireless network 200, the auxiliary I/O subsystem 112, the data port 114, the short-range communications subsystem 122, or other device subsystem 124.

To identify a user, the communications device 100 may use a SIM/RUIM/USIM card 126 (i.e. Subscriber Identity Module or a Removable User Identity Module or a Universal Subscriber Identity Module, etc.), which is inserted into a SIM/RUIM/USIM interface 128, to communicate with a network. The SIM/RUIM/USIM card 126 is one type of a conventional "smart card" that can be used to identify a user of the communications device 100 and to personalize the communications device 100, among other things. Without the SIM/RUIM/USIM card 126, the communications device 100 may not be fully operational for communication with the wireless network 200, in some embodiments. By inserting the SIM/RUIM/USIM card 126 into the SIM/RUIM/USIM interface 128, a user can access subscribed services. Such subscribed services may include, for example, web browsing and messaging such as email, voice mail, SMS, and Multimedia Messaging Services (MMS).

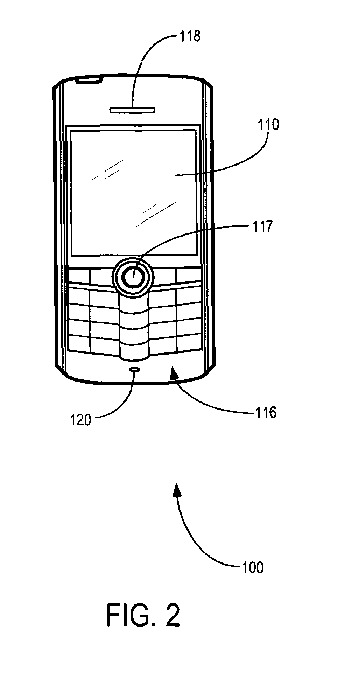

Now referring to FIG. 2, shown is an illustrative front view of a handheld mobile communication device 100 that may provide a suitable operating environment. As shown, the communication device 100 may include a display 110, a keyboard 116, and other input or navigation means such as a trackball 117. The display 110 may be configured to display various screens allowing the user of device 100 to view screen outputs from the various software applications 134, including the image applications 148. Display 110 may also be configured to provide a touch-sensitive screen input in response to a prompt or query displayed on display 110. Device 100 further includes an earpiece or speaker 118 and a microphone 120 in order to support the telephony functions previously described.

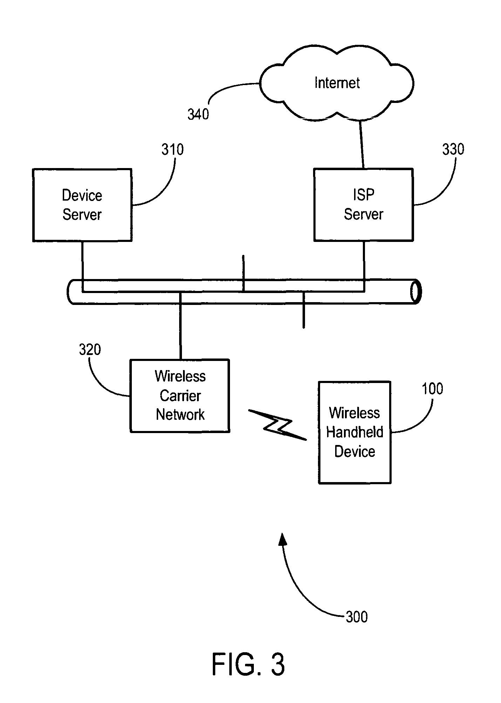

Now referring to FIG. 3, shown is a schematic block diagram of an illustrative network 300, which may provide a suitable operating environment. As shown, network 300 includes a device server 310 for hosting various server applications for device 100. Network 300 further includes a wireless carrier network 320 which provides wireless communications between device 100 and device server 310.

Still referring to FIG. 3, network 300 also includes an ISP server 330 which provides a connection to the Internet 340. With a suitable Internet browser module 138 provided on device 100, a user may access the Internet 340 via the wireless carrier network 320, and the ISP server 330. Alternatively, device 100 may connect to a local wireless network such as Wi-Fi, using short-range communications module 122.

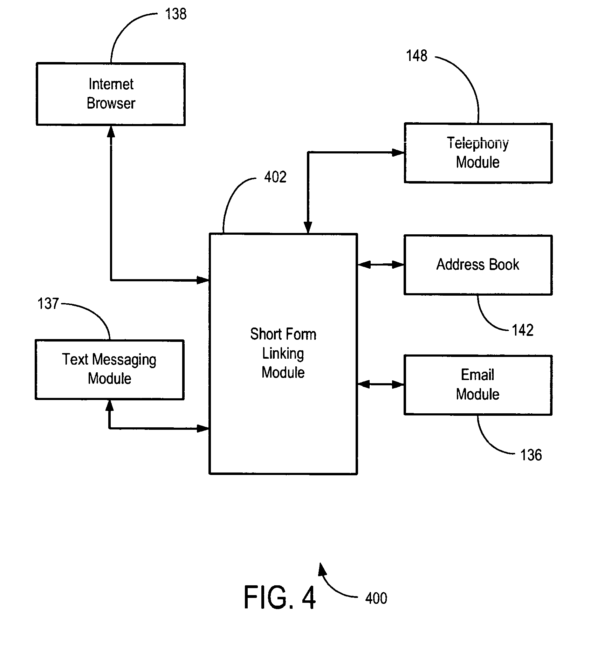

Now referring to FIG. 4, shown is a schematic block diagram of a system 400 in accordance with an embodiment. As shown in FIG. 4, short form linking module 402 is operatively connected to e-mail module 136, text messaging module 137, Internet browser module 138, address book module 142, and telephony module 148.

For the purposes of the present discussion, short form linking module 402 will be used as an illustrative example of a means for dialing short forms. However, it will be understood that other means for dialing short forms such as speed dial keys, and voice activated dialing may also be used.

As well, a dialing short form may be associated with an entity which may have a name, number, e-mail address, Internet address, etc. The entity may be a person, a group, or an organization, or some specific part of an organization, and may therefore have an entry in address book 142 which contains a corresponding name, E.164 standard telephone number, e-mail address, Internet address, etc.

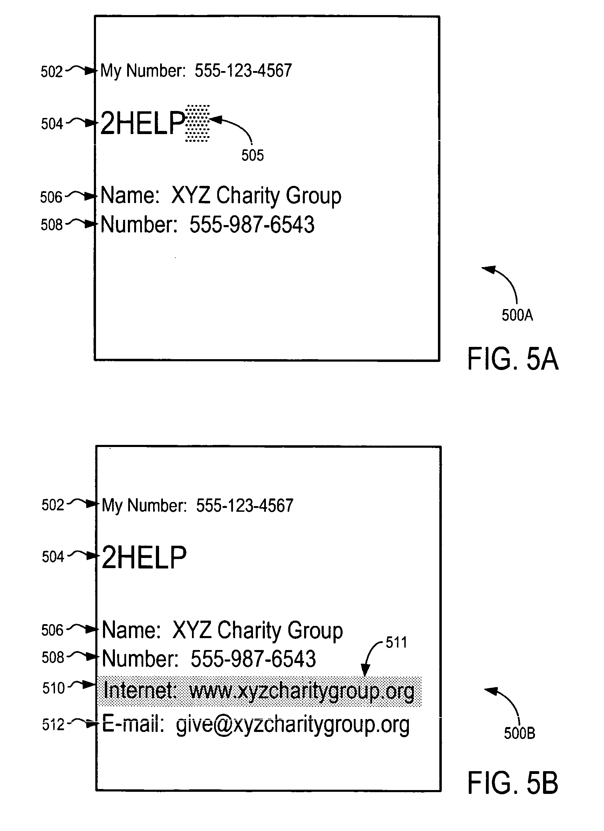

Now referring to FIG. 5A, shown is an illustrative example of a user interface screen 500A for dialing a short code, as may be displayed on display 110 for example. A short code generally refers to a short telephone number that can be used for text messaging, i.e., SMS messaging, or MMS messaging. Short codes are shorter than full telephone numbers that follow the E.164 standard. For ease of reference, a short code may be used herein to refer to a numerical short code (e.g., 2653), or a vanity short code (e.g., COKE) used in mnemonic dialing, or both. As shown, screen 500A may display at 502 an assigned telephone number to identify device 100 to a user. This may be followed by a short code input field 504 for entering a mnemonic or vanity short code such as "2HELP" in this illustrative example. Cursor 505 is shown to indicate that short code input field 504 is the current active field.

For example, shown at 506 is the name associated with the short code "2HELP", which in this illustrative example is "XYZ Charity Group". Also shown at 508 is a telephone number such as an E.164 standard telephone number corresponding to XYZ Charity Group.

Now referring to FIG. 5B, in another illustrative example of a user interface screen 500B, in addition to a name 506 and telephone number 508 corresponding to a short code as illustrated in FIG. 5A, access links to an Internet address 510, and an e-mail address 512 corresponding to XYZ Charity Group are also provided. By providing these access links on screen 500B for dialing a short code as soon as the short code is entered, the user is provided with readily accessible alternative communication options.

For example, once dialing the short code 2HELP for calling XYZ Charity Group, instead of calling the telephone number for XYZ Charity Group, a user may decide instead to access the XYZ Charity Group website at a corresponding URL, such as "www.xyzcharitygroup.org" shown by way of example in FIG. 5B. Alternatively, the user may decide to send an e-mail instead by selecting the e-mail communication option shown in user interface 500B.

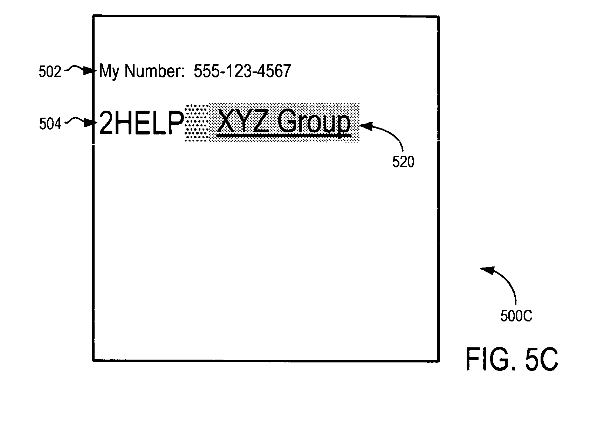

Now referring to FIG. 5C, in another embodiment, a link 520 may be displayed directly adjacent to the short code input field 504 instead of separate access links as shown above. In this embodiment, the user has the option of directly accessing the link 520 without having to move the cursor or input to another field. For example, in response to a short code "2HELP" input into the short code input field 504, the link labelled XYZ Group may be displayed for immediate selection. Selecting the link 520 would thus provide a user with a direct response mechanism. This may be done, for example, by simply pressing an "Enter" key to complete the short code, or pressing some other key or navigation means such as trackball 117. The selection of link 520 may also occur by directly selecting link 520 using a touchscreen, for example. Upon selection, link 520 may provide a webpage link (e.g. WAP or HTML) that leads to further details or a direct click to donate/purchase option. Thus, as will be appreciated, the short code itself may provide direct access to one or more links.

In another embodiment, by selecting link 520 and then pressing a "menu" button provided on communication device 100, a number of menu options may be provided to access various features of the communication device, such as a "Get Link" option, an "Email" option, or "Chat with..." option to communicate with the XYZ Group. The menu may also provide various other options, such as Call Now, Call Forward (Send to a Friend), Buy Now, and Show Me More Details. For example, Call Now immediately connects the caller. Call Forward allows a link to be forwarded to another device. Buy Now allows a direct click to purchase option. Show Me More Details may provide more information about the link.

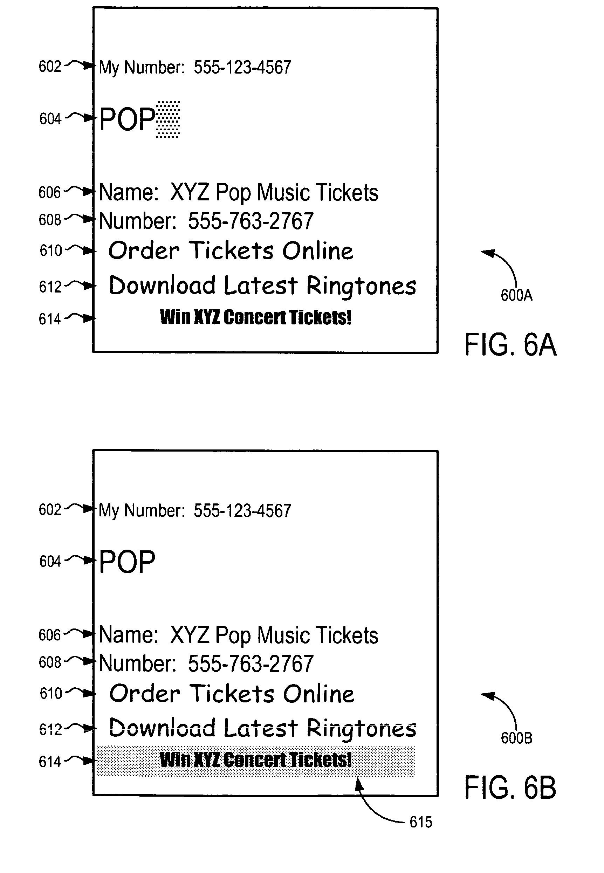

Now referring to FIG. 6A, in another embodiment, user interface screen 600A shows another illustrative example of short code dialing. In this illustrative example, the vanity short code is "POP" for texting "XYZ Pop Music Tickets". As shown, a short code may be entered at short code input field 604. Screen 600A displays the name 606 and telephone number 608 corresponding to the short code. However, in addition, screen 600A displays a number of user selectable access links 610, 612 and 614. These selectable access links 610, 612, 614 may enable access to various advertisements or to associated services available from the contact. For example, access link 610 is labelled "Order Tickets Online", access link 612 is labelled "Download Latest Ring tones", and 614 is labelled "Win XYZ Concert Tickets". These access links 610, 612 and 614 may be associated with a contact (e.g. comprising a telephone number and possibly a contact name) to appear together with the contact whenever the associated dialing short code is entered at 604. These selectable access links 610, 612, 614 may, for example, enable access to webpages via internet browser 138 for providing further information and access for ordering tickets online, downloading ring tones, or entering a contest to win concert tickets.

Alternatively, these access links may enable access to other types of communication services, such as SMS text messaging for example. By way of illustration, upon selection of access link 614 as shown in FIG. 6B, an SMS text message may be sent to a predetermined telephone number to obtain further information for ordering tickets, downloading ringtones, or for entering a contest, for example.

In an embodiment, some of the access links provided on user interface screen 600A may be time limited, such as access link 614 for entering a contest to win tickets for a concert. These time limited access links may be pushed to the device 100 when first made available, and may be set to be removed from user interface screen 600A upon expiry. From time to time, selectable access links may be added, removed or updated as necessary.

In an embodiment, some of the access links provided on user interface screen 600A may be geographically limited, such that access links 610, 612, 614 appear only if the device 100 is positioned within a particular geographic region, within the coverage area of wireless carrier network 320. These geographically limited access links may be pushed to the device 100 when the device 100 first enters the coverage area of wireless carrier network 320, and may also be configured to be removed if the device 100 leaves the particular geographic region. The geographic region may be a relatively large region such as a metropolitan area, for example, or a smaller region such as a college campus or a large shopping plaza. While the access links 610, 612, 614 are accessible within a particular geographic region, when a user enters a short code, the access codes may be made available for selection as previously described. Upon departing the geographic region, the access links 610, 612, 614 may be configured to expire, or to be ineffective when selected.

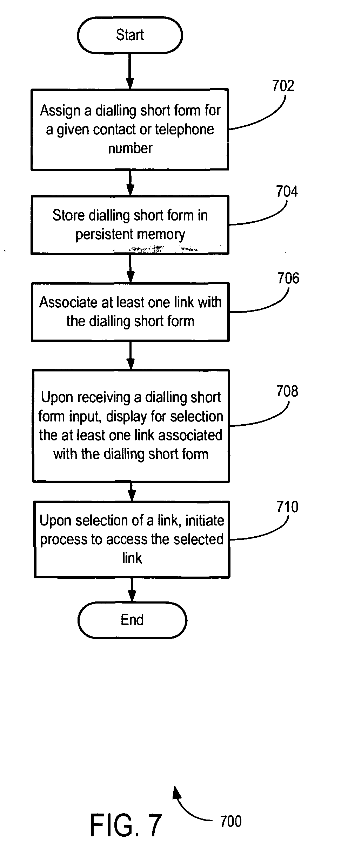

Now referring to FIG. 7, shown is a schematic flowchart of a method 700 in accordance with an embodiment. As shown, method 700 begins at block 702 and provides a means for assigning a dialing short form for a given contact or telephone number. The contact and/or telephone number may be found in address book 142, for example. Method 700 then proceeds to block 704, where method 700 may store the assigned dialing short form in persistent memory, such as in flash memory 108 controlled by main processor 102.

Method 700 then proceeds to block 706, where method 700 associates at least one link with the contact comprising a telephone number and/or name. The access link may be for example a website URL, or access to a SMS text message address. Method 700 then proceeds to block 708.

At block 708, upon receiving a dialing short form input, method 700 proceeds to display any access links associated with the corresponding contact or telephone number for selection. This may include any time limited access links as previously described. For example, the access links may be URLs or SMS text messaging services that may be available for access only for a limited time, or only during certain hours of the day, for example. Method 700 then proceeds to block 710.

At block 710, upon selection of one of the access links, method 700 initiates a process to access the selected access link. For example, if the access link is a website URL, upon selection method 700 may load the corresponding webpage into a web browser. If the access link is a SMS text messaging service, method 700 may initiate access to a text message screen. In each case, a confirmation page may appear to confirm that a user wishes to proceed with the connection, or to cancel the connect operation if desired.

Thus, in an aspect, there is provided a method of displaying a selectable access link, the method comprising: assigning a dialing short form to an entity; storing the dialing short form in persistent memory; associating one or more access links with the dialing short form; and upon receiving a dialing short form input, displaying for selection together with the dialing short form the one or more access links.

In an exemplary embodiment, the method further comprises displaying an access link adjacent to a dialing short form input field; and upon detection of selection of the adjacently displayed access link, initiating a process to access the selected access link.

In another exemplary embodiment, the dialing short form comprises at least one of a short code, speed dial key assignment, or voice activated dialing assignment.

In another exemplary embodiment, the at least one of the one or more access links comprises at least one of a website URL, SMS text messaging access, or email access.

In another exemplary embodiment, at least one of the one or more access links is time limited; and the method further comprises displaying for selection the at least one time limited access link for a duration of a time limit.

In another exemplary embodiment, at least one access link is geographically limited to a geographic region; and the method further comprises displaying for selection the at least one geographically limited access link for a duration that the device is within the geographic region.

In another exemplary embodiment, the method further comprises adding, removing or updating one of the one or more displayed access links associated with the dialing short form.

In another exemplary embodiment, at least one of the one or more access links enables linking to an advertisement or product or service associated with an entity.

In another aspect, there is provided a system for displaying a selectable access link, the system having processing and memory means and adapted to: assign a dialing short form to an entity; store the dialing short form in persistent memory; associate one or more access links with the dialing short form; and display for selection together with the dialing short form the one or more access links upon receiving a dialing short form input.

In an exemplary embodiment, the system is further adapted to: display an access link adjacent to a dialing short form input field; and upon selection of the adjacently displayed access link, initiate a process to access the selected access link.

In another exemplary embodiment, the dialing short form is one of a short code, fast dial key, or voice activated dialing.

In another exemplary embodiment, the at least one access link comprises one of a website URL, SMS text messaging access, or email access.

In another exemplary embodiment, at least one access link is time limited, and the system is further adapted to display for selection the at least one time limited access link for the duration of the time limit.

In another exemplary embodiment, at least one access link is geographically limited to a geographic region, and the system is further adapted to display for selection the at least one geographically limited access link for the duration that the device is within the geographic region.

In another exemplary embodiment, the system is further adapted to add, remove or update the at least one displayed access link.

In another exemplary embodiment, the at least one access link enables linking to an advertisement or service associated with the entity.

In another aspect, there is provided a data processor readable medium storing data processor code that when executed on a handheld mobile communication device adapts the device to display a selectable access link, the data processor code comprising: code for assigning a dialing short form to an entity; code for storing the dialing short form in persistent memory; code for associating at least one access link with the dialing short form; and code for displaying for selection with the dialing short form the one or more access links upon receiving a dialing short form input.

In another exemplary embodiment, the data processor code further comprises: code for displaying an access link adjacent to dialing short form input field; and code for initiating a process to access the selected access link upon selection of the adjacently displayed access link.

In another exemplary embodiment, the dialing short form is one of a short code, fast dial key, or voice activated dialing.

In another exemplary embodiment, the at least one access link comprises one of a website URL, SMS text messaging access, or email access.

While illustrative exemplary embodiments have been described above, it will be appreciated that various changes and modifications may be made. More generally, the scope of the invention is defined by the following claims.

## Claims

1. A method of displaying an available selectable access link at a communication device (100) in response to an input, the method comprising:
assigning a short code to an entity;
storing the short code in persistent memory (108);
associating one or more access links (520) with the short code;
upon receiving a short code input, displaying together with the short code the one or more access links (520) for selection, wherein at least one of the at least one or more access links (520) is time limited, and
displaying for selection the at least one time limited access link (520) for a duration of a time limit.

2. The method of claim 1, further comprising:
displaying an access link (520) adjacent to a short code input field; and
upon selection of the adjacently displayed access link (520), initiating a process to access the selected access link (520).

3. The method of claim 1 or claim 2,
wherein the short code comprises at
least one of a speed dial key assignment, or voice activated dialing assignment.

4. The method of any preceding claim,
wherein the at least one of the one or more
access links (520) comprises at least one of a website URL, SMS text messaging access, or email access.

5. The method of any preceding claim,
wherein at least one of the one or more access links (520) is geographically limited to a geographic region; and
wherein the method further comprises displaying for selection the at least one geographically limited access link (520) for a duration that the device (100) is within the geographic region.

6. The method of any preceding claim,
wherein the method further comprises adding, removing or updating one of the one or more displayed access links (520) associated with the short code.

7. The method of any preceding claim,
wherein at least one of the one or more access links (520) enables linking to an advertisement or product or service associated with an entity.

8. A system for displaying a selectable access link (520), the system having processing and memory means and adapted to carry out the method of any preceding claim.

9. The system of claim 8,
wherein the short code is one of a fast dial key, or voice activated dialing.

10. A data processor readable medium storing data processor code that when executed on a handheld mobile communication device (100) adapts the device (100) to carry out the method of any one of claims 1 to 7.

11. The data processor readable medium of claim 10,
wherein the short code is one of a fast dial key, or voice activated dialing.

## Patentansprüche

1. Ein Verfahren zum Anzeigen einer verfügbaren auswählbaren Zugangsverbindung an einer Kommunikationsvorrichtung (100) in Reaktion auf eine Eingabe, wobei das Verfahren aufweist:
Zuweisen eines Kurzcodes zu einer Entität;
Speichern des Kurzcodes in einem persistenten Speicher (108);
Assoziieren einer oder mehrerer Zugangsverbindungen (520) mit dem Kurzcode; und
bei einem Empfangen einer Kurzcode-Eingabe, Anzeigen, zusammen mit dem Kurzcode, der einen oder mehreren Zugangsverbindungen (520) zur Auswahl, wobei zumindest eine der zumindest einen oder mehreren Zugangsverbindungen (520) zeitbegrenzt ist, und
Anzeigen zur Auswahl der zumindest einen zeitbegrenzten Zugangsverbindung (520) für eine Dauer einer Zeitbegrenzung.

2. Das Verfahren gemäß Anspruch 1, das weiter aufweist:
Anzeigen einer Zugangsverbindung (520) angrenzend an ein Kurzcode-Eingabefeld; und
bei Auswahl der angrenzend angezeigten Zugangsverbindung (520), Initiieren eines Prozesses zum Zugreifen auf die ausgewählte Zugangsverbindung (520).

3. Das Verfahren gemäß Anspruch 1 oder Anspruch 2,
wobei der Kurzcode zumindest eines aufweist aus einer Kurzwahl-Tastenzuordnung oder einer Sprach-aktivierten Wähl-Zuordnung.

4. Das Verfahren gemäß einem vorhergehenden Anspruch,
wobei die zumindest eine der einen oder mehreren Zugangsverbindungen (520) zumindest eines aufweist aus einer Website-URL, einem SMS-Textnachrichten-Zugang oder einem Email-Zugang.

5. Das Verfahren gemäß einem vorhergehenden Anspruch,
wobei zumindest eine der einen oder mehreren Zugangsverbindungen (520) geographisch auf eine geographische Region begrenzt ist; und wobei das Verfahren weiter aufweist ein Anzeigen zur Auswahl der zumindest einen geographisch begrenzten Zugangsverbindung (520) für eine Dauer, während der die Vorrichtung (100) in der geographischen Region ist.

6. Das Verfahren gemäß einem vorhergehenden Anspruch,
wobei das Verfahren weiter aufweist ein Hinzufügen, Entfernen oder Aktualisieren einer der einen oder mehreren angezeigten Zugangsverbindungen (520), die mit dem Kurzcode assoziiert ist/sind.

7. Das Verfahren gemäß einem vorhergehenden Anspruch,
wobei zumindest eine der einen oder mehreren Zugangsverbindungen (520) ein Verbinden zu einer Werbung oder einem Produkt oder einem Dienst ermöglicht, die/das/der mit einer Entität assoziiert ist.

8. Ein System zum Anzeigen einer auswählbaren Zugangsverbindung (520),
wobei das System Verarbeitungs- und Speichermittel hat und ausgebildet ist zum Ausführen des Verfahrens gemäß einem vorhergehenden Anspruch.

9. Das System gemäß Anspruch 8,
wobei der Kurzcode einer ist aus einer Schnellwähltaste oder einem Sprach-aktivierten Wählen.

10. Ein Datenprozessor-lesbares Medium zum Speichern von Datenprozessor-Code, der bei einem Ausführen auf einer handgehaltenen mobilen Kommunikationsvorrichtung (100) die Vorrichtung (100) ausbildet zur Durchführung des Verfahrens gemäß einem der Ansprüche 1 bis 7.

11. Das Datenprozessor-lesbare Medium gemäß Anspruch 10,
wobei der Kurzcode einer ist aus einer Schnellwähltaste oder einem Sprach-aktivierten Wählen.

## Revendications

1. Procédé d'affichage d'une liaison d'accès sélectionnable disponible au niveau d'un dispositif de communication (100) en réponse à une entrée, le procédé comprenant :
l'assignation d'un code court à une entité ;
le stockage du code court dans une mémoire persistante (108) ;
l'association d'une ou plusieurs liaisons d'accès (520) au code court ;
lors de la réception d'une entrée de code court, l'affichage conjoint avec le code court des une ou plusieurs liaisons d'accès (520) pour la sélection, où au moins une des au moins une ou plusieurs liaisons d'accès (520) est limitée dans le temps, et
l'affichage pour la sélection de la au moins une liaison d'accès (520) limitée dans le temps pour une durée d'une limite de temps.

2. Procédé selon la revendication 1, comprenant en outre :
l'affichage d'une liaison d'accès (520) adjacente à un champ d'entrée de code court ; et
lors de la sélection de la liaison d'accès (520) affichée de façon adjacente, l'initiation d'un processus pour accéder à la liaison d'accès (520) sélectionnée.

3. Procédé selon la revendication 1 ou la revendication 2,
dans lequel le code court comprend au moins une d'une assignation de touche de composition abrégée, ou d'une assignation de composition à commande vocale.

4. Procédé selon l'une quelconque des revendications précédentes,
dans lequel la au moins une des une ou plusieurs liaisons d'accès (520) comprend au moins un parmi une URL de site Web, un accès de messagerie textuelle SMS, ou un accès de courriel.

5. Procédé selon l'une quelconque des revendications précédentes,
dans lequel au moins une des une ou plusieurs liaisons d'accès (520) est limitée géographiquement à une région géographique ; et
dans lequel le procédé comprend en outre l'affichage pour la sélection de la au moins une liaison d'accès (520) limitée géographiquement pour une durée pendant laquelle le dispositif (100) est dans la région géographique.

6. Procédé selon l'une quelconque des revendications précédentes,
dans lequel le procédé comprend en outre l'ajout, le retrait ou la mise à jour d'une des une ou plusieurs liaisons d'accès (520) affichées associées au code court.

7. Procédé selon l'une quelconque des revendications précédentes,
dans lequel au moins une des une ou plusieurs liaisons d'accès (520) permet la liaison à une annonce publicitaire ou un produit ou un service associé à une entité.

8. Système pour afficher une liaison d'accès (520) sélectionnable, le système ayant des moyens de traitement et de mémoire et adapté pour effectuer le procédé selon l'une quelconque des revendications précédentes.

9. Système selon la revendication 8,
dans lequel le code court est un d'une touche de composition rapide, ou d'une composition à commande vocale.

10. Support lisible par un processeur de données stockant un code de processeur de données qui, lorsqu'il est exécuté sur un dispositif de communication mobile portatif (100) adapte le dispositif (100) pour effectuer le procédé selon l'une quelconque des revendications 1 à 7.

11. Support lisible par un processeur de données selon la revendication 10,
dans lequel le code court est un d'une touche de composition rapide, ou d'une composition à commande vocale.
